(19) Europäisches Patentamt / European Patent Office / Office européen des brevets

(11) **EP 4 752 038 A1**

(12) **EUROPEAN PATENT APPLICATION**
published in accordance with Art. 153(4) EPC

(43) Date of publication:
**03.06.2026 Bulletin 2026/23**

(21) Application number: **23946696.4**

(22) Date of filing: **26.07.2023**

(51) International Patent Classification (IPC):
**B62D 6/00** *(2006.01)* **B62D 5/04** *(2006.01)*
**B62D 101/00** *(2006.01)* **B62D 137/00** *(2006.01)*

(52) Cooperative Patent Classification (CPC):
**B62D 6/002; B62D 5/04; B62D 6/00; B62D 15/025;**
B62D 6/008

(86) International application number:
**PCT/JP2023/027411**

(87) International publication number:
**WO 2025/022614 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: JTEKT CORPORATION
Kariya-shi, Aichi 448-8652 (JP)

(72) Inventors:
• **TAMAIZUMI, Terutaka**
  **Kariya-shi, Aichi 448-8652 (JP)**
• **INDEN, Yuki**
  **Kariya-shi, Aichi 448-8652 (JP)**
• **YAMAUCHI, Izumi**
  **Kariya-shi, Aichi 448-8652 (JP)**

(74) Representative: **Winter, Brandl - Partnerschaft
mbB
Alois-Steinecker-Straße 22
85354 Freising (DE)**

(54) **STEERING CONTROL DEVICE AND STEERING CONTROL METHOD**

(57) The input-dependent variable calculation processing is processing of calculating a value of an input-dependent variable in accordance with a steering intent of a driver. The arbitration processing is processing in which the value of the input-dependent variable and an external request value are inputs, and also a value of a target steered angle variable is an output. The operation processing is processing in which an actuator is operated. The target value setting processing is processing in which by the value of the target steered angle variable output by the arbitration processing is an input, and also a target yaw rate is an output. The reflection processing is processing for reflecting a manipulated variable of feedback control, in which the target yaw rate is a target value of the controlled variable, in operation of a steered angle by the operation processing.

Fig.2

## Description

TECHNICAL FIELD

The present disclosure relates to a steering control device and a steering control method.

BACKGROUND ART

Patent Document 1 listed below describes a device that suppresses deviation in a traveling direction of a vehicle in accordance with a difference between a normative yaw rate in accordance with a steering angle of steering and a detected value of yaw rate. Patent Document 2 listed below describes a device that controls a motor that steers steered wheels based on a cooperative steering command value that takes into account both a manual steering command value in accordance with steering by a driver and an automatic steering command value.

Related Art Documents

Patent Documents

Patent Document 1: Japanese Unexamined Patent Application Publication No. 2021-14221 (JP 2021-14221 A)
Patent Document 2: Japanese Unexamined Patent Application Publication No. 2020-168918 (JP 2020-168918 A)

SUMMARY OF THE INVENTION

Problem to be Solved by the Invention

In a case in which the steered wheels are steered based on the cooperative steering command value as described above, there is a concern that deviation of the traveling direction may not be appropriately suppressed when the normative yaw rate set in accordance with the steering angle of steering is used.

Means for Solving the Problem

One aspect of the present disclosure provides a steering control device. The steering control device is configured to execute input-dependent variable calculation processing, arbitration processing, operation processing, target value setting processing, and reflection processing. The input-dependent variable calculation processing is processing of calculating a value of an input-dependent variable in accordance with a steering intent indicated by an operation of an input unit by a driver. The input-dependent variable is a variable indicating a steered angle of a steered wheel of a vehicle in accordance with the steering intent. The arbitration processing is processing in which the value of the input-dependent variable and an external request value are inputs, and also a value of a target steered angle variable is an output. The target steered angle variable is a target value of the steered angle. The external request value is a variable indicating a request value for the steered angle, independent of the steering intent. The operation processing is processing in which the value of the target steered angle variable is an input, and also an actuator is operated. The actuator is configured to impart power to the steered wheel, to steer the steered wheel. The target value setting processing is processing in which the value of the target steered angle variable output by the arbitration processing is an input, and also a target yaw rate is an output. The reflection processing is processing that reflects a manipulated variable of feedback control, in which a yaw rate is a controlled variable and also the target yaw rate is a target value of the controlled variable, in operation of the steered angle by the operation processing, and also is processing that is executed when a value, in which the external request value is superimposed on at least the value of the input-dependent variable, is substituted into the target steered angle variable output by the arbitration processing.

Another aspect of the present disclosure provides a steering control method. The steering control method includes a step of executing input-dependent variable calculation processing, arbitration processing, operation processing, target value setting processing, and reflection processing. The input-dependent variable calculation processing is processing of calculating a value of an input-dependent variable in accordance with a steering intent indicated by an operation of an input unit by a driver. The input-dependent variable is a variable indicating a steered angle of a steered wheel of a vehicle in accordance with the steering intent. The arbitration processing is processing in which the value of the input-dependent variable and an external request value are inputs, and also a value of a target steered angle variable is an output. The target steered angle variable is a target value of the steered angle. The external request value is a variable indicating a request value for the steered angle, independent of the steering intent. The operation processing is processing in which the value of the target steered angle variable is an input, and also an actuator is operated. The actuator is configured to impart power to the steered wheel, to steer the steered wheel. The target value setting processing is processing in which the value of the target steered angle variable output by the arbitration processing is an input, and also a target yaw rate is an output. The reflection processing is processing that reflects a manipulated variable of feedback control, in which a yaw rate is a controlled variable and also the target yaw rate is a target value of the controlled variable, in operation of the steered angle by the operation processing, and also is processing that is executed when a value, in which the external request value is superimposed on at least the value of the input-dependent variable, is substituted into the target steered angle variable output by the arbitration processing.

## BRIEF DESCRIPTION OF THE DRAWINGS

[FIG. 1] is a diagram illustrating a configuration of a steering control system according to a first embodiment.

[FIG. 2] is a block diagram illustrating processing executed by a steering control device in FIG. 1.

[FIG. 3] is a diagram illustrating a configuration of a steering control system according to a second embodiment.

[FIG. 4] is a block diagram illustrating processing executed by a steering control device in FIG. 3.

[FIG. 5] is a block diagram illustrating processing executed by a steering control device according to a third embodiment.

## MODES FOR CARRYING OUT THE INVENTION

### <First Embodiment>

Hereinafter, a first embodiment will be described with reference to the drawings.

### "Prerequisite Configuration"

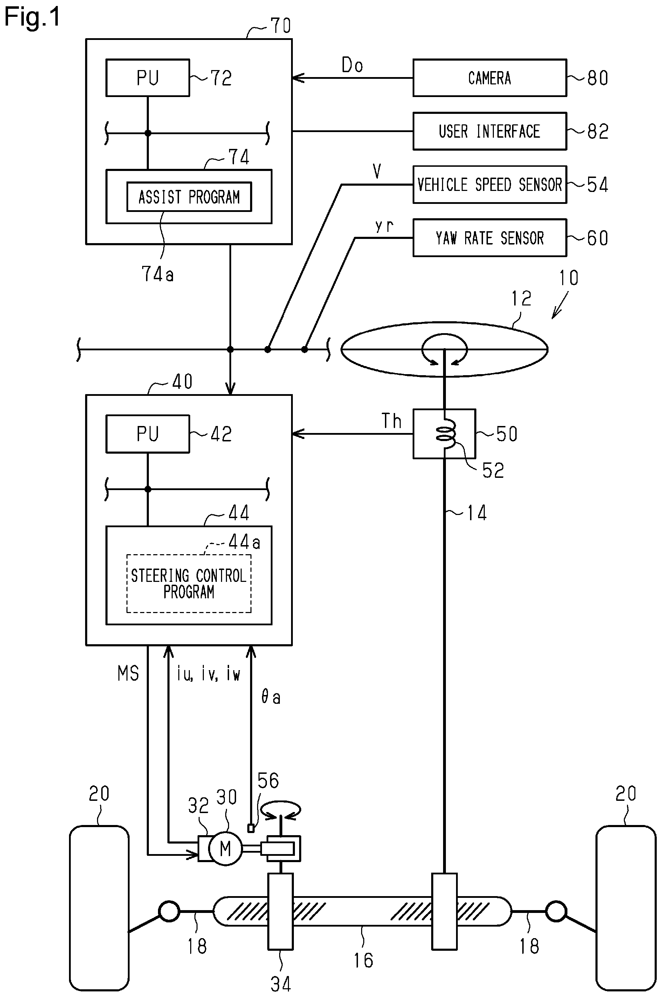

As illustrated in FIG. 1, a steering system 10 includes a steering wheel 12. The steering wheel 12 is an input unit through which a driver inputs his/her intent regarding steering. A transmission shaft 14 is linked to the steering wheel 12. Accordingly, when the steering wheel 12 rotates, the transmission shaft 14 rotates integrally therewith. Rotational power of the transmission shaft 14 is transmitted to a steered shaft 16. The steered shaft 16 extends in a vehicle width direction (right-left direction in FIG. 1). Steered wheels 20 are linked to both ends of the steered shaft 16 via tie rods 18.

The transmission shaft 14 is provided so as to intersect the steered shaft 16. The transmission shaft 14 and the steered shaft 16 have teeth formed thereon, which mesh with each other. These teeth mesh with each other, thereby enabling transmission of power from the transmission shaft 14 to the steered shaft 16. That is to say, the rotational power of the transmission shaft 14 is converted into axial direction displacement power of the steered shaft 16. Displacement of the steered shaft 16 in the axial direction is transmitted to the steered wheels 20 via the tie rods 18. The steered angle of the steered wheels 20 is thus changed. Note that the steered angle refers to the turning angle of tires.

The steering system 10 further includes an assist motor 30. The assist motor 30 generates an assisting force that is a force for assisting the driver with steering.

The rotational power of the assist motor 30 is applied to a drive shaft 34. The drive shaft 34 and the steered shaft 16 have teeth formed thereupon, which mesh with each other. These teeth mesh with each other, thereby enabling transmission of power from the drive shaft 34 to the steered shaft 16. That is to say, the rotational power of the drive shaft 34 is converted into axial direction displacement power of the steered shaft 16. The rotational power of the assist motor 30 is thus converted into the axial direction displacement power of the steered shaft 16, via the drive shaft 34. In detail, the assist motor 30 is, in one example, a three-phase brushless motor. Note that output voltage of an inverter 32 is applied to terminals of the assist motor 30.

A steering control device 40 controls a controlled variable of the steering system 10 that is a controlled object. The steering control device 40 references a steering torque Th input to the steering wheel 12, in order to control the controlled variable. The steering torque Th is detected by a torque sensor 50. The torque sensor 50 is a sensor that detects the steering torque Th in accordance with a degree of twisting of a torsion bar 52 that is part of the transmission shaft 14. The steering control device 40 also references a vehicle speed V detected by a vehicle speed sensor 54. The steering control device 40 also references a rotational angle $\theta a$ of the assist motor 30 detected by a rotational angle sensor 56. The steering control device 40 also references currents iu, iv, and iw flowing through the assist motor 30.

The steering control device 40 includes a PU 42 and a storage device 44. The PU 42 is a software processing device such as a CPU, a GPU, a TPU, or the like. The storage device 44 includes a storage medium such as electrically rewritable nonvolatile memory, a disk medium, or the like. The storage device 44 stores a steering control program 44a. The steering control device 40 controls the controlled variable by the PU 42 executing the steering control program 44a stored in the storage device 44.

The steering control device 40 is capable of communicating with an ADAS ECU 70. The ADAS ECU 70 executes processing to assist with steering of a vehicle, based on objects outside of the vehicle. The ADAS ECU 70 acquires information regarding objects outside of the vehicle by acquiring image data Do that indicates an image of an area ahead of the vehicle, shot by a camera 80. Now, objects outside of the vehicle are not limited to objects that are present upward from the traveling road surface, such as a vehicle situated ahead, a guardrail, or the like, but also includes lane demarcation lines and so forth. The ADAS ECU 70 determines whether or not to execute assist processing in accordance with whether or not steering assistance is necessary, as instructed by input operations performed on a user interface 82.

The ADAS ECU 70 includes a PU 72 and a storage device 74. The PU 72 executes processing for assisting with steering, by the PU 72 executing an assist program 74a stored in the storage device 74.

"Processing Executed by Steering Control Device 40"

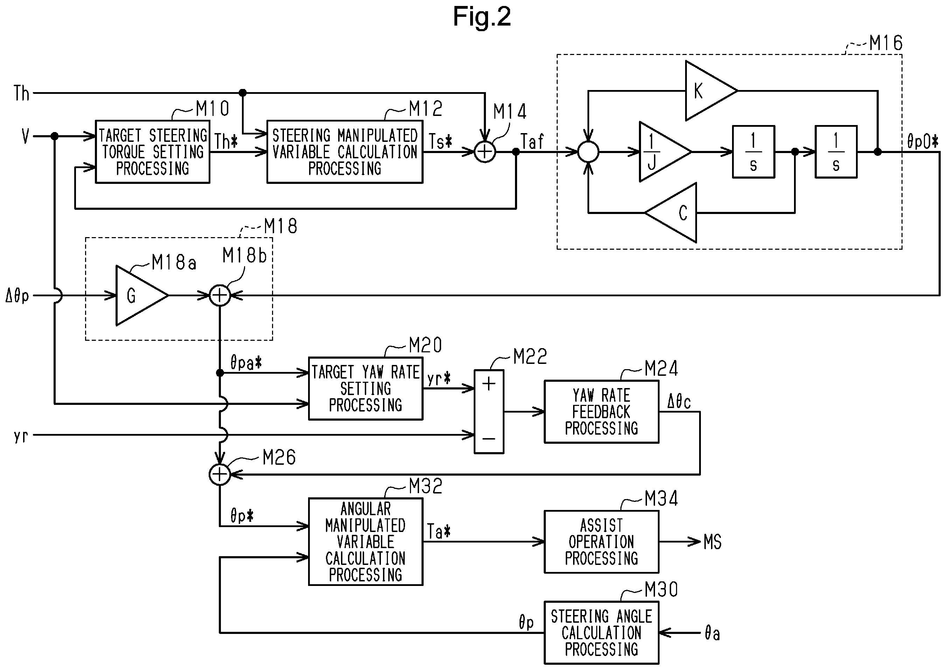

FIG. 2 illustrates processing executed by the steering control device 40. The processing illustrated in FIG. 2 is realized by the PU 42 executing the steering control program 44a at, for example, a predetermined cycle.

Target steering torque setting processing M10 is processing for calculating a target steering torque Th*, which is a target value of the steering torque Th, based on an axial force Taf. The axial force Taf is a force applied to the steered shaft 16. Note, however, that the axial force Taf is an amount that is converted into the torque of the transmission shaft 14. Note that the target steering torque setting processing M10 includes processing of setting the target steering torque Th* to a different value in accordance with the vehicle speed V, even though the axial force Taf is the same. This setting is intended to allow the driver to experience an optimum steering feel in accordance with the vehicle speed V.

Steering manipulated variable calculation processing M12 is processing for calculating a steering manipulated variable Ts*, which is the manipulated variable of the control in which the steering torque Th is the controlled variable. The steering manipulated variable calculation processing M12 is processing in which processing is included for calculating a manipulated variable of feedback control in which the steering torque Th is the controlled variable and also the target steering torque Th* is a target value of the controlled variable, thereby calculating the steering manipulated variable Ts* in accordance with this manipulated variable. The steering manipulated variable calculation processing M12 may further be processing that includes processing for calculating a manipulated variable of open-loop control in which the target steering torque Th* is the target value of the controlled variable, thereby calculating the steering manipulated variable Ts* in accordance with this manipulated variable. The manipulated variable for feedback control is an amount for increasing an absolute value of requested torque for the assist motor 30, in a case in which the signs of the steering torque Th and the target steering torque Th* are both positive, and the steering torque Th is greater than the target steering torque Th*, for example. Note that the steering manipulated variable Ts* is, in one example, an amount converted into torque applied to the transmission shaft 14.

Axial force calculation processing M14 is processing for calculating the axial force Taf by adding the steering torque Th to the steering manipulated variable Ts*. Note that the steering torque Th is the torque applied to the transmission shaft 14, and accordingly, in the present embodiment, the axial force Taf is a value obtained by converting the force applied in the axial direction of the steered shaft 16 into the torque applied to the transmission shaft 14.

Normative model computation processing M16 is processing in which the axial force Taf is an input, and also a target equivalent steered angle $\theta p0^*$, which is a target value of an equivalent steered angle $\theta p$, is an output. In detail, the normative model computation processing M16 is processing that outputs the target equivalent steered angle $\theta p0^*$ using an expression in which the equivalent steered angle $\theta p$ in a model equation expressed by the following Expression (c1) is replaced with the target equivalent steered angle $\theta p0^*$.

$$Taf = K \cdot \theta p + C \cdot \theta p' + J \cdot \theta p'' \quad \ldots (c1)$$

The model expressed by the above Expression (c1) is a model of a value indicated by the equivalent steered angle $\theta p$ in a case in which torque of an amount that is equal to the axial force Taf is input to the transmission shaft 14. The equivalent steered angle $\theta p$ is a variable that indicates the steered angle of the steered wheels 20. The equivalent steered angle $\theta p$ has a positive correlation with the steered angle. The equivalent steered angle $\theta p$ may be, for example, a rotational angle of the transmission shaft 14.

A viscosity coefficient C in the above Expression (c1) is obtained by modeling friction and so forth of the steering system 10. Also, inertia coefficient J is obtained by modelling inertia of the steering system 10. Also, modulus of elasticity K is obtained by modelling specifications of the suspension, wheel alignment, and so forth, of the vehicle in which the steering system 10 is installed. This model does not need to be a model that accurately represents the actual steering system 10 or the vehicle in which the steering system 10 is installed. This model may be a normative model designed to make behavior of the steered angle relative to the input to be ideal behavior. In a case in which the normative model is employed, the feel of steering can be adjusted by the design of the normative model.

Arbitration processing M18 is processing in which the target equivalent steered angle $\theta p0^*$ and an assist correction amount $\Delta \theta p$ are inputs, and also a target equivalent steered angle $\theta pa^*$ is an output. The assist correction amount $\Delta \theta p$ is a correction amount for the target equivalent steered angle $\theta p0^*$ output from the ADAS ECU 70 in a case in which the ADAS ECU 70 is executing steering assist processing. The assist processing may be, for example, processing for preventing lane departure of the vehicle. In this case, the assist correction amount $\Delta \theta p$ is an amount for finely correcting the target equivalent steered angle $\theta p0^*$ in order to prevent lane departure of the vehicle.

Specifically, the arbitration processing M18 includes gain multiplication processing M18a and addition processing M18b. The gain multiplication processing M18a is processing for multiplying the assist correction amount $\Delta \theta p$ by a gain G and outputting a value that is obtained thereby. The addition processing M18b is processing of substituting a value, obtained by multiplying the target equivalent steered angle $\theta p0^*$ by the gain G, into the target equivalent steered angle $\theta pa^*$. In a case of starting the assist processing, the PU 72 gradually increases the gain G from "0" toward "1". Also, in a case of ending the assist processing, the PU 72 gradually decreases the gain G from "1" toward "0".

Target yaw rate setting processing M20 is processing in which the target equivalent steered angle $\theta pa^*$ and the vehicle speed V are inputs and also a target yaw rate $yr^*$ is an output. The target yaw rate $yr^*$ is a yaw rate yr that is envisioned in a case of the vehicle traveling on a flat road surface without being affected by airflow, with the steered angle is the target equivalent steered angle $\theta pa^*$, and traveling at the vehicle speed V.

The PU 42 causes the sign of the target yaw rate $yr^*$ to match the sign of the target equivalent steered angle $\theta pa^*$. The PU 42 changes the target yaw rate $yr^*$ in accordance with the vehicle speed V, on condition that an absolute value of the target yaw rate $yr^*$ in a case in which the vehicle speed V is high, is equal to or greater than the absolute value of the target yaw rate $yr^*$ in a case in which the vehicle speed V is low. The PU 42 changes the target yaw rate $yr^*$ in accordance with the target equivalent steered angle $\theta pa^*$ on condition that the absolute value of the target yaw rate $yr^*$ in a case in which the absolute value of the target equivalent steered angle $\theta pa^*$ is large, is equal to or greater than the absolute value of the target yaw rate $yr^*$ in a case in which the absolute value of the target equivalent steered angle $\theta pa^*$ is small.

Note that in a description of "changing B in accordance with A while satisfying a condition that B in a case in which A is large is equal to or greater than B in a case in which A is small", the expressions "in a case in which A is large" and "in a case in which A is small" mean a relative magnitude relation in a case of comparing the two. For example, "in a case in which A is large" corresponds to "in a case in which A is a first value", and "in a case in which A is small" corresponds to "in a case in which A is a second value smaller than the first value". This also means that, in the above description, depending on the settings of the first value and the second value, B in a case in which A is the first value may be greater than B in a case in which A is the second value.

In one example, the target yaw rate setting processing M20 may be processing in which the PU 42 performs map computation of the target yaw rate $yr^*$, in a state in which map data is stored in the storage device 44. The map data is data in which the target equivalent steered angle $\theta pa^*$ and the vehicle speed V are input variables, and also the target yaw rate $yr^*$ is an output variable.

Note that map data is a data set of discrete values of the input variables, and values of the output variables corresponding to each of the values of the input variables. Also, it is sufficient for map computation to be processing in which, in a case that a value of an input variable matches any of the values of the input variables in the map data, a corresponding value of the output variable in the map data is output as a computation result. Also, it is sufficient for map computation to be processing in which, in a case that the value of the input variable does not match any of the values of the input variables in the map data, a value obtained by interpolation of a plurality of values of the output variable included in the map data is taken as a computation result. Alternatively, map computation may be processing in which, in a case that the value of the input variable does not match any of the values of the input variables in the map data, a value of the output variable in the map data corresponding to the nearest one of a plurality of values of the input variables included in the map data is taken as a computation result.

Deviation calculation processing M22 is processing for calculating deviation between the target yaw rate $yr^*$ and the yaw rate yr. Yaw rate feedback processing M24 is processing in which the output value of the deviation calculation processing M22 is input, and also a yaw rate correction amount $\Delta\theta c$ is output. The yaw rate correction amount $\Delta\theta c$ is a manipulated variable of feedback control in which the yaw rate yr is a controlled variable and the target yaw rate $yr^*$ is a target value of the controlled variable. The yaw rate correction amount $\Delta\theta c$ may be an output value of a proportional element in accordance with the output value of the deviation calculation processing M22. Also, the yaw rate correction amount $\Delta\theta c$ may be a sum of the output value of the proportional element and an output value of an integral element in accordance with the output value of the deviation calculation processing M22. Also, the yaw rate correction amount $\Delta\theta c$ may be a sum of the output value of the proportional element, the output value of the integral element, and an output value of a derivative element, in accordance with the output value of the deviation calculation processing M22. Also, the yaw rate correction amount $\Delta\theta c$ may be a sum of the output value of the proportional element and the output value of the derivative element in accordance with the output value of the deviation calculation processing M22. Note, however, that the feedback control for calculating the yaw rate correction amount $\Delta\theta c$ is not limited to classical control.

Target equivalent steered angle setting processing M26 is processing of substituting a value obtained by adding the yaw rate correction amount $\Delta\theta c$ to the target equivalent steered angle $\theta pa^*$, into a target equivalent steered angle $\theta p^*$. Steering angle calculation processing M30 is processing in which the rotational angle $\theta a$ of the assist motor 30 is input and also the equivalent steered angle $\theta p$ is output. The steering angle calculation processing M30 includes processing of accumulating the rotational angle $\theta a$. In this accumulating processing, the equivalent steered angle when the vehicle is traveling straight is set to "0".

Angular manipulated variable calculation processing M32 is processing in which the equivalent steered angle $\theta p$ and the target equivalent steered angle $\theta p^*$ are inputs, and also assist torque $Ta^*$ is an output. The assist torque Ta* is a manipulated variable of control in which the equivalent steered angle $\theta p$ is a controlled variable. The angular manipulated variable calculation processing M32 is processing that includes processing for calculating the manipulated variable of feedback control in which the equivalent steered angle $\theta p$ is the controlled variable and also the target equivalent steered angle $\theta p^*$ is the target value of the controlled variable, thereby calculating the assist torque Ta* in accordance with this manipulated variable. The angular manipulated variable calculation processing M32 may be processing in which the assist torque Ta* is calculated in accordance with this manipulated variable, by further including processing for calculating a manipulated variable of open-loop control in which the target equivalent steered angle $\theta p^*$ is the target value of the controlled variable.

Assist operation processing M34 is processing for outputting an operation signal MS to the inverter 32 in order to control torque of the assist motor 30 in accordance with the assist torque Ta*. Note that in reality, the operation signal MS is an operation signal for each arm of each leg of the inverter 32.

<Functions and Effects of Embodiment>

The PU 42 of the steering control device 40 calculates a target equivalent steered angle $\theta p0^*$ in accordance with the steering torque Th input to the transmission shaft 14. The PU 72 of the ADAS ECU 70 calculates the assist correction amount $\Delta\theta p$ for assisting with the steering in accordance with the image data Do. The PU 42 sets the target yaw rate yr* based on the target equivalent steered angle $\theta pa^*$, which is a value obtained by correcting the target equivalent steered angle $\theta p0^*$ with the assist correction amount $\Delta\theta p$. The PU 42 corrects the target equivalent steered angle $\theta pa^*$ using the yaw rate correction amount $\Delta\theta c$, which is a manipulated variable for bringing the yaw rate yr closer to the target yaw rate yr*, and thus sets the final target equivalent steered angle $\theta p^*$. The PU 42 then controls the equivalent steered angle $\theta p$ so as to come closer to the target equivalent steered angle $\theta p^*$.

Here, the target equivalent steered angle $\theta p^*$ is a value obtained by correcting the target equivalent steered angle $\theta pa^*$ by the yaw rate correction amount $\Delta\theta c$. The yaw rate correction amount $\Delta\theta c$ is a manipulated variable for bringing the yaw rate yr closer to the target yaw rate yr*. The target yaw rate yr* is a yaw rate that is presumed to be realized in a case of traveling on a flat road surface without being affected by air currents and so forth, under traveling conditions that satisfy the target equivalent steered angle $\theta pa^*$ and the vehicle speed V. Accordingly, factors that cause the yaw rate yr to deviate from the target yaw rate yr* include crosswinds blowing against the vehicle, disturbances caused by the road surface such as grade of the road surface, bumps on the road surface, and so forth, and further, aging deterioration of the vehicle, and so forth.

The assist correction amount $\Delta\theta p$ output by the ADAS ECU 70 does not take into account disturbances caused by such crosswinds and road surfaces, aging deterioration of the vehicle, and the like. Accordingly, even when the assist correction amount $\Delta\theta p$ is calculated to suppress lane departure, for example, there is a concern that the vehicle may depart from the lane due to effects of crosswinds and so forth, in a case of not employing the yaw rate correction amount $\Delta\theta c$.

Conversely, the PU 42 can realize the intended steering by employing the yaw rate correction amount $\Delta\theta c$. In particular, the PU 42 inputs the target equivalent steered angle $\theta pa^*$ output by the arbitration processing M18 to the target yaw rate setting processing M20. In other words, the PU 42 set the target yaw rate yr* in accordance with the value of the variable farthest downstream for calculating the target equivalent steered angle $\theta p^*$, excluding the correction by the yaw rate correction amount $\Delta\theta c$. Accordingly, the target yaw rate yr* can be set to a value that is more appropriate for realizing the intended steering, as compared to a case of substituting a variable value further upstream, such as the target equivalent steered angle $\theta p0^*$ or the like, into the target yaw rate setting processing M20.

The above embodiment can further yield the following functions and effects.
(1-1) In the present embodiment, the manipulated variable of the feedback control, in which the yaw rate yr is the controlled variable, is employed as the correction amount for correcting the target equivalent steered angle $\theta pa^*$. This enables the feedback control, in which the yaw rate yr is the controlled variable, to be promptly reflected in the equivalent steered angle $\theta p$.

<Second Embodiment>

A second embodiment will be described below with reference to the drawings, primarily regarding differences from the first embodiment.

"Prerequisite Configuration"

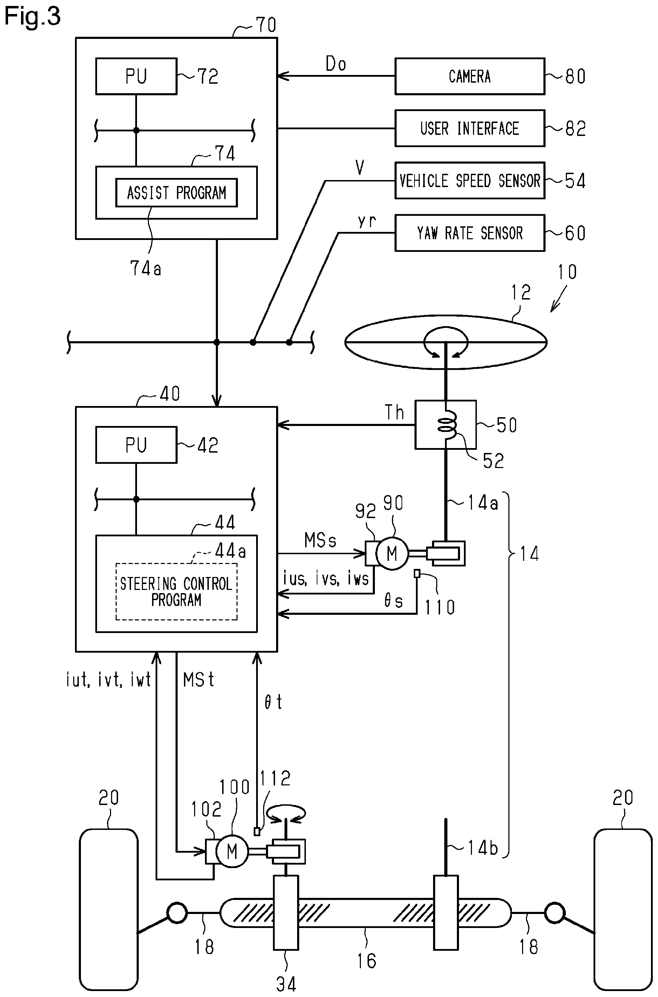

FIG. 3 illustrates a configuration of a steering control system according to the present embodiment. Note that in FIG. 3, members corresponding to the members illustrated in FIG. 1 are denoted by the same signs, for the sake of convenience.

As illustrated in FIG. 3, in the steering system 10, the transmission shaft 14 is separated into an input shaft 14a that is linked to the steering wheel 12 and an output shaft 14b that is engaged with the steered shaft 16. Note that in the present embodiment, the output shaft 14b is unnecessary in reality. However, the output shaft 14b is provided for convenience of the following description.

A reactive force motor 90 is provided on the input shaft 14a. The reactive force motor 90 is a motor for applying, to the steering wheel 12, a reactive force that is torque in an opposite direction to that of torque input by the driver. The reactive force motor 90 is, in one example, a three-phase brushless motor. Note that an output voltage of an inverter 92 is applied to terminals of the reactive force motor 90.

Torque of a steering motor 100 is applied to the steered shaft 16 via the drive shaft 34. The steering motor 100 is, in one example, a three-phase brushless motor. Note that an output voltage of an inverter 102 is applied to terminals of the steering motor 100.

The steering system 10 is a controlled object of the steering control device 40. The steering control device 40 operates the inverter 92 to control the reactive force, which is a controlled variable of the controlled object. Also, the steering control device 40 operates the inverter 102 to control the steered angle of the steered wheels 20, which is a controlled variable of the controlled object.

The steering control device 40 references a rotational angle $\theta s$ of the reactive force motor 90 detected by a rotational angle sensor 110, in order to control the reactive force that is a controlled variable. Also, the steering control device 40 references currents $ius$, $ivs$, and $iws$, flowing through the reactive force motor 90, in order to control the reactive force. Also, the steering control device 40 references a rotational angle $\theta t$ of the steering motor 100 detected by a rotational angle sensor 112, in order to control the steered angle that is a controlled variable. The steering control device 40 also references currents $iut$, $ivt$, and $iwt$, flowing through the steering motor 100, in order to control the steered angle.

"Processing Executed by Steering Control Device 40"

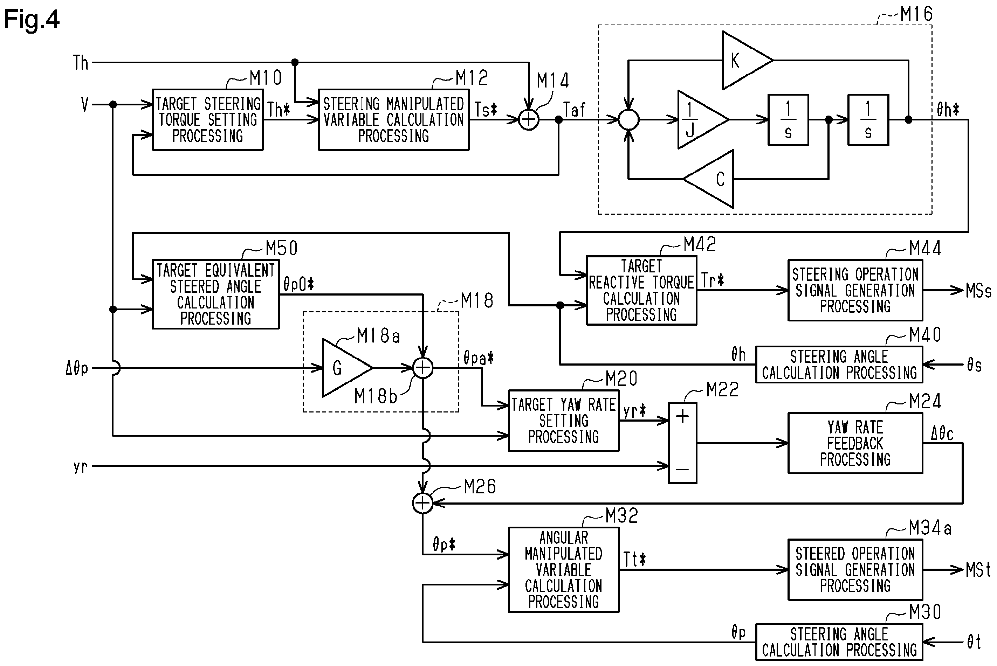

FIG. 4 illustrates processing executed by the steering control device 40. In other words, FIG. 4 illustrates processing executed by the steering control device 40 in a state in which transmission of power from the steering wheel 12 to the steered wheels 20 is disconnected. Note that in FIG. 4, processing corresponding to the processing illustrated in FIG. 2 is denoted by the same signs, for the sake of convenience.

As illustrated in FIG. 4, the normative model computation processing M16 is processing for outputting a target steering angle $\theta h^*$ instead of the target equivalent steered angle $\theta p0^*$. Steering angle calculation processing M40 is processing in which the rotational angle $\theta s$ is an input and also a steering angle $\theta h$ is an output. The steering angle calculation processing M40 includes processing of accumulating the rotational angle $\theta s$. Note that in this accumulating processing, the steering angle $\theta h$ is set to zero at a neutral position.

Target reactive torque calculation processing M42 is processing in which the steering angle $\theta h$ and the target steering angle $\theta h^*$ are inputs and also a target reactive torque $Tr^*$ is an output. The target reactive torque calculation processing M42 is processing for calculating the target reactive torque $Tr^*$ in accordance with this manipulated variable, by including processing for calculating the controlled variable of feedback control in which the steering angle $\theta h$ is a controlled variable and also the target steering angle $\theta h^*$ is the target value of the controlled variable. The target reactive torque calculation processing M42 may be processing for calculating the target reactive torque $Tr^*$, by further including processing for calculating a manipulated variable of open-loop control in which the target steering torque $Th^*$ is the target value of the controlled variable, in accordance with this manipulated variable.

Steering operation signal generation processing M44 is processing for operating the inverter 92 in accordance with input of the target reactive torque $Tr^*$. The steering operation signal generation processing M44 includes processing for calculating the manipulated variable of control in which torque of the reactive force motor 90 is the controlled variable and also the target reactive torque $Tr^*$ is the target value of the controlled variable. The rotational angle $\theta s$ and the currents $ius$, $ivs$, and $iws$, are referenced when calculating the manipulated variable. Also, the steering operation signal generation processing M44 includes processing of operating the inverter 92 in accordance with this manipulated variable. An operation signal $MSs$ for the inverter 92 is illustrated in FIG. 4. Note that the operation signal $MSs$ is actually an individual operation signal for each switching element of the inverter 92.

Target equivalent steered angle calculation processing M50 is processing in which the steering angle $\theta h$ and the vehicle speed V are inputs and also the target equivalent steered angle $\theta p0^*$ is an output. The PU 42 changes the target equivalent steered angle $\theta p0^*$ in accordance with the steering angle $\theta h$ on condition that an absolute value of the target equivalent steered angle $\theta p0^*$ in a case in which an absolute value of the steering angle $\theta h$ is large is equal to or greater than an absolute value of the target equivalent steered angle $\theta p0^*$ in a case in which the absolute value of the steering angle $\theta h$ is small.

The steering angle calculation processing M30 is processing in which the rotational angle $\theta t$ of the steering motor 100 is an input instead of the rotational angle $\theta a$, and also the equivalent steered angle $\theta p$ is an output. The angular manipulated variable calculation processing M32 is processing in which the equivalent steered angle $\theta p$ and the target equivalent steered angle $\theta p^*$ are inputs, and also a target steered torque $Tt^*$ is an output instead of the assist torque $Ta^*$.

Steered operation signal generation processing M34a is processing of operating the inverter 102 in accordance with input of the target steered torque $Tt^*$. The steered operation signal generation processing M34a may be processing for calculating a manipulated variable of control in which the torque of the steering motor 100 is a controlled variable and also a value obtained by converting the target steered torque $Tt^*$ into the torque of the steering motor 100 is a target value of the controlled variable. The rotational angle $\theta t$ and the cur-

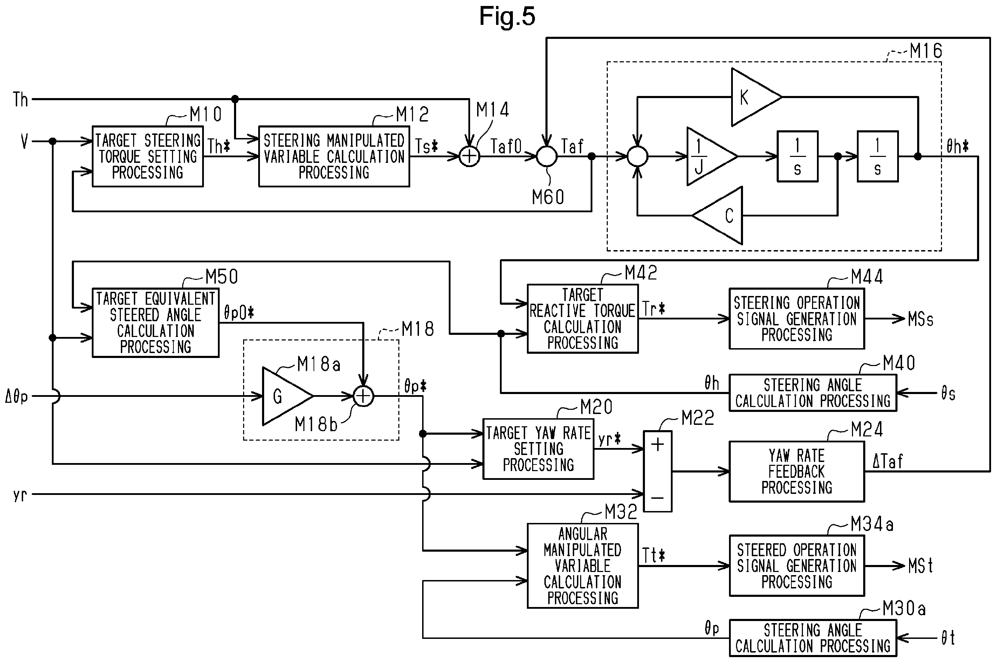

rents iut, ivt, and iwt are referenced when calculating the manipulated variable. Also, the steered operation signal generation processing M34a includes processing of operating the inverter 102 in accordance with this manipulated variable. An operation signal MSt for the inverter 102 is illustrated in FIG. 5. Note that the operation signal MSt is actually an individual operation signal for each switching element of the inverter 102.

<Functions and Effects of Second Embodiment>

The PU 42 calculates the target equivalent steered angle θp0* in accordance with the steering angle θh. The PU 72 of the ADAS ECU 70 calculates the assist correction amount Δθp for assisting with the steering in accordance with the image data Do. The PU 42 sets the target yaw rate yr* based on the target equivalent steered angle θpa*, which is a value obtained by correcting the target equivalent steered angle θp0* with the assist correction amount Δθp. The PU 42 corrects the target equivalent steered angle θpa* using the yaw rate correction amount Δθc, which is a manipulated variable for bringing the yaw rate yr closer to the target yaw rate yr*, and thus sets the final target equivalent steered angle θp*. The PU 42 then controls the steered angle of the steered wheels 20 so as to come closer to the target equivalent steered angle θp*.

Thus, according to the present embodiment, the same functions and effects as those of the first embodiment are achieved.

<Third Embodiment>

A third embodiment will be described below with reference to the drawings, primarily regarding differences from the second embodiment.

FIG. 5 illustrates processing executed by the steering control device 40. In other words, FIG. 5 illustrates processing executed by the steering control device 40 in the state in which transmission of power from the steering wheel 12 to the steered wheels 20 is disconnected. Note that in FIG. 5, processing corresponding to the processing illustrated in FIG. 4 is denoted by the same signs, for the sake of convenience.

In the present embodiment, output of the arbitration processing M18 is the target equivalent steered angle θp*, which is the input to the yaw rate feedback processing M24 and the angular manipulated variable calculation processing M32. A yaw rate correction amount ΔTaf output by the yaw rate feedback processing M24 is a correction amount for the axial force Taf. That is to say, the axial force calculation processing M14 is processing of substituting a value, obtained by adding the steering torque Th to the steering manipulated variable Ts*, into an axial force Taf0. Axial force correction processing M60 is processing in which a value obtained by adding the yaw rate correction amount ΔTaf to the axial force Taf0 is substituted into the axial force Taf that is input to the target steering torque setting processing M10 and the normative model computation processing M16.

Thus, the target steering angle θh* reflects the manipulated variable of the feedback control, in which the yaw rate yr is the controlled variable. Hence, the PU 42 controls the torque of the reactive force motor 90 such that the steering angle θh is appropriate for bringing the yaw rate yr closer to the target yaw rate yr*. On the other hand, the PU 42 sets the target equivalent steered angle θp0* in accordance with the steering angle θh. Accordingly, the target equivalent steered angle θp* reflects the manipulated variable of the feedback control, in which the yaw rate yr is the controlled variable.

<Other Embodiments>

Note that the present embodiment can be modified as follows. The present embodiment and the following modifications can be carried out combined with each other, as long as no technical contradictions arise.

"Regarding Input-Dependent Variable Calculation Processing"

• In the processing exemplified in FIG. 2, the target equivalent steered angle θp0* as an input-dependent variable is calculated using feedback control in which the steering torque Th is the controlled variable, but this is not restrictive. For example, the target equivalent steered angle θp0* as an input-dependent variable may be calculated just from the manipulated variable of open-loop control in which the steering torque Th is the controlled variable.

• In the processing illustrated in FIGS. 4 and 5, the target equivalent steered angle θp0* as an input-dependent variable is calculated in accordance with the steering angle θh indicating the steering intent of the driver, and the vehicle speed V, but this is not restrictive. For example, the target equivalent steered angle θp0* may be calculated as an input-dependent variable in accordance with the target steering angle θh* and the vehicle speed V. In this case, the steering intent of the driver is expressed by the steering torque Th. The target steering angle θh* is calculated by processing in which the steering torque Th is an input and also the target steering angle θh* is an output. Accordingly, the target equivalent steered angle θp0* calculated by the processing in which the target steering angle θh* and the vehicle speed V are inputs, and also the target equivalent steered angle θp0* is an output, is an input-dependent variable.

"Regarding Collaborative Processing"

- The processing in which the output value of the processing for assisting with the steering of the vehicle in accordance with information regarding objects outside of the vehicle and the value of the input-dependent variable are inputs, and also the value of the target steered angle variable is an output, is not limited to the processing exemplified in the above embodiments. For example, the above processing may be processing in which a weighted average value of an output value of processing for assisting with steering of the vehicle, and a value of an input-dependent variable, are substituted into a target steered angle variable.

  - An external request value that is an input of the cooperative processing is not limited to the output value of the processing that assists with the steering of the vehicle in accordance with information regarding objects outside of the vehicle. For example, this may be a correction amount for correcting the target equivalent steered angle $\theta p0^*$ in accordance with a result of detecting wheel slippage.

"Regarding Operation Processing"

- The operation processing is not limited to processing of operating the actuator in accordance with the manipulated variable of feedback control in which the equivalent steered angle $\theta p$ is the controlled variable. For example, the processing may be processing in which the actuator is operated only in accordance with the manipulated variable of open-loop control in which the target equivalent steered angle $\theta p^*$ is the target value of the controlled variable.

"Regarding Target Value Setting Processing"

- The target value setting processing is not limited to processing in which the target equivalent steered angle $\theta p^*$ and the vehicle speed V are inputs and also the target yaw rate $yr^*$ is an output. For example, in a case in which the vehicle is capable of steering both front wheels and rear wheels, the target values of the equivalent steered angles of both the front wheels and the rear wheels, and the vehicle speed V, may be input variables.

"Regarding Reflection Processing"

- The processing of reflecting the manipulated variable of feedback control, in which the yaw rate $yr$ is the controlled variable, in the reactive force, thereby reflecting the manipulated variable in the operation of the actuator by the operation processing via the value of the input-dependent variable, is not limited to the processing exemplified in FIG. 5. This processing may be, for example, processing of correcting a modulus of elasticity K in the normative model computation processing M16 using the manipulated variable of feedback control, in which the yaw rate $yr$ is the controlled variable. Also, this processing may also be processing of correcting the target steering angle $\theta h^*$ using the manipulated variable of feedback control in which the yaw rate $yr$ is the controlled variable, for example.

"Regarding ADAS ECU 70"

- Data containing information regarding objects outside the vehicle is not limited to image data. For example, the data may be point cloud data generated in accordance with reflected light of laser light emitted in directions that are different from each other, by a LIDAR device. Point cloud data is a collection of data indicating distance and emission direction between the object that reflected the laser light and the LIDAR device.

"Regarding Steering Control Device"

- In the configuration exemplified in FIG. 3, the device that operates the reactive force motor 90 and the device that operates the steering motor 100 may be separate devices.

  - The ADAS ECU 70 and the steering control device 40 may be configured integrally.

- The steering control device is not limited to a configuration including the PU 42 and the storage device 44, and executing software processing. For example, the steering control device may include a dedicated hardware circuit such as an application-specific integrated circuit (ASIC) or the like, for example, that executes at least part of the processing executed in the above embodiments. That is to say, the steering control device may include a processing circuit with any of the following configurations (a) to (c).

(a) A processing circuit including a processing device that executes all of the above processing in accordance with a program, and a program storage device such as a storage device or the like that stores the program.

(b) A processing circuit including a processing device that executes part of the above processing in accordance with a program, a program storage device, and a dedicated hardware circuit that executes the remaining processing.

(c) A processing circuit including a dedicated hardware circuit that executes all of the above processing.

Here, the number of software execution devices including a processing device and a program storage device may be a plurality. Also, the number of the dedicated hardware circuits may be a plurality.

"Regarding Steering Control Method"

- The entity that executes the various types of control described above is not limited to a steering control device installed in a vehicle. For example, part of the above-described processing may be executed by a mobile terminal of the driver.

"Regarding Input Unit"

- The input unit into which the driver inputs steering intent is not limited to the steering wheel 12. For example, the input unit may be a joystick.

"Regarding State in which Power Transmission is Disconnected"

- The configuration that realizes the state in which power transmission between the input unit to which the steering torque is input and the steered wheels 20 is disconnected is not limited to the configuration exemplified in FIG. 4. For example, a clutch may be provided between the input shaft 14a and the output shaft 14b.

"Regarding Steering System"

- An arrangement in which with the assist motor 30 or the steering motor 100 is disposed coaxially with the steered shaft 16, for example, may be employed as an actuator that steers the steered wheels 20. Alternatively, an actuator that transmits the power of the assist motor 30 or the steering motor 100 to the steered shaft 16 via a belt speed reducer using a ball screw mechanism, for example, may be employed.

- The steering system that can change a relation between the steering angle and the steered angle is not limited to the steering system in which power transmission between the steering wheel 12 and the steered wheels 20 is disconnected, as exemplified in FIG. 3. For example, the steering system may be configured to be capable of changing the relation between the steering angle and the steered angle by using a variable gear as a gear that enables power transmission between the steering wheel 12 and the steered wheels 20.

**Claims**

1. A steering control device, configured to execute input-dependent variable calculation processing, arbitration processing, operation processing, target value setting processing, and reflection processing, wherein

   the input-dependent variable calculation processing is processing of calculating a value of an input-dependent variable in accordance with a steering intent indicated by an operation of an input unit by a driver,
   the input-dependent variable is a variable indicating a steered angle of a steered wheel of a vehicle in accordance with the steering intent,
   the arbitration processing is processing in which the value of the input-dependent variable and an external request value are inputs, and also a value of a target steered angle variable is an output,
   the target steered angle variable is a target value of the steered angle,
   the external request value is a variable indicating a request value for the steered angle, independent of the steering intent,
   the operation processing is processing in which the value of the target steered angle variable is an input, and also an actuator is operated,
   the actuator is configured to impart power to the steered wheel, to steer the steered wheel,
   the target value setting processing is processing in which the value of the target steered angle variable output by the arbitration processing is an input, and also a target yaw rate is an output, and
   the reflection processing is processing that reflects a manipulated variable of feedback control, in which a yaw rate is a controlled variable and also the target yaw rate is a target value of the controlled variable, in operation of the steered angle by the operation processing, and also is processing that is executed when a value, in which the external request value is superimposed on at least the value of the input-dependent variable, is substituted into the target steered angle variable output by the arbitration processing.

2. The steering control device according to claim 1, wherein the reflection processing is processing of inputting the value of the target steered angle variable corrected by the manipulated variable into the operation processing.

3. The steering control device according to claim 1, wherein

   the steering control device is configured to execute the input-dependent variable calculation processing, the arbitration processing, the operation processing, the target value setting processing, the reflection processing, and reactive force setting processing, in a state in which power transmission between the steered wheel and the input unit is disconnected,
   the reactive force setting processing is processing of setting a reactive force that is a force countering the operation of the input unit by the driver, and
   the reflection processing includes processing of reflecting the manipulated variable in the reactive force, to reflect the manipulated variable in the operation of the steered angle by the operation processing through the value of the input-dependent variable.

4. The steering control device according to claim 1, wherein the external request value is an output value of processing for assisting with steering of the vehicle in accordance with information from outside of the vehicle.

5. A steering control method comprising a step of executing input-dependent variable calculation processing, arbitration processing, operation processing, target value setting processing, and reflection processing, wherein

   the input-dependent variable calculation processing is processing of calculating a value of an input-dependent variable in accordance with a steering intent indicated by an operation of an input unit by a driver,
   the input-dependent variable is a variable indicating a steered angle of a steered wheel of a vehicle in accordance with the steering intent, the arbitration processing is processing in which the value of the input-dependent variable and an external request value are inputs, and also a value of a target steered angle variable is an output,
the target steered angle variable is a target value of the steered angle,
the external request value is a variable indicating a request value for the steered angle, independent of the steering intent,
the operation processing is processing in which the value of the target steered angle variable is an input, and also an actuator is operated,
the actuator is configured to impart power to the steered wheel, to steer the steered wheel,
the target value setting processing is processing in which the value of the target steered angle variable output by the arbitration processing is an input, and also a target yaw rate is an output, and
the reflection processing is processing that reflects a manipulated variable of feedback control, in which a yaw rate is a controlled variable and also the target yaw rate is a target value of the controlled variable, in operation of the steered angle by the operation processing, and also is processing that is executed when a value, in which the external request value is superimposed on at least the value of the input-dependent variable, is substituted into the target steered angle variable output by the arbitration processing.

Fig.1

Fig.2

Fig.3

Fig.4

# Fig.5

EP 4 752 038 A1

EP 4 752 038 A1

## INTERNATIONAL SEARCH REPORT

| International application No. |
|---|
| **PCT/JP2023/027411** |

| A. | CLASSIFICATION OF SUBJECT MATTER |
|---|---|

*B62D 6/00*(2006.01)i; *B62D 5/04*(2006.01)i; *B62D 101/00*(2006.01)n; *B62D 137/00*(2006.01)n
FI:  B62D6/00; B62D5/04; B62D101:00; B62D137:00

According to International Patent Classification (IPC) or to both national classification and IPC

| B. | FIELDS SEARCHED |
|---|---|

Minimum documentation searched (classification system followed by classification symbols)

B62D6/00; B62D5/04; B62D101/00; B62D137/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2011/052098 A1 (TOYOTA JIDOSHA KABUSHIKI KAISHA) 05 May 2011 (2011-05-05)<br>entire text, all drawings | 1-5 |
| A | JP 2020-175865 A (MITSUBISHI ELECTRIC CORPORATION) 29 October 2020 (2020-10-29)<br>entire text, all drawings | 1-5 |
| A | JP 2017-206116 A (NSK LTD.) 24 November 2017 (2017-11-24)<br>entire text, all drawings | 1-5 |
| A | JP 2008-132918 A (NSK LTD.) 12 June 2008 (2008-06-12)<br>entire text, all drawings | 1-5 |
| A | CN 112046607 A (CHINA FAW GROUP CORP.) 08 December 2020 (2020-12-08)<br>entire text, all drawings | 1-5 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/027411**

| Patent document cited in search report | | | Publication date (day/month/year) | Patent family member(s) | | | Publication date (day/month/year) |
|---|---|---|---|---|---|---|---|
| WO | 2011/052098 | A1 | 05 May 2011 | US | 2012/0215406 | A1 | |
| | | | | entire text, all drawings | | | |
| | | | | EP | 2495156 | A1 | |
| | | | | CN | 102596690 | A | |
| JP | 2020-175865 | A | 29 October 2020 | WO | 2020/217550 | A1 | |
| | | | | EP | 3960587 | A1 | |
| | | | | entire text, all drawings | | | |
| | | | | CN | 113710561 | A | |
| JP | 2017-206116 | A | 24 November 2017 | (Family: none) | | | |
| JP | 2008-132918 | A | 12 June 2008 | (Family: none) | | | |
| CN | 112046607 | A | 08 December 2020 | (Family: none) | | | |

Form PCT/ISA/210 (patent family annex) (January 2015)

**EP 4 752 038 A1**

## REFERENCES CITED IN THE DESCRIPTION

**Patent documents cited in the description**

- JP 2021014221 A
- JP 2020168918 A